Europäisches Patentamt

European Patent Office

Office européen des brevets

(11) Publication number: **0 632 571 A2**

# EUROPEAN PATENT APPLICATION

(21) Application number: **94109552.3**

(22) Date of filing: **21.06.94**

(51) Int. Cl.6: **H02M 3/337**

(30) Priority: **23.06.93 IT MI931353**

(43) Date of publication of application:
**04.01.95 Bulletin 95/01**

(84) Designated Contracting States:
**BE DE FR GB**

(71) Applicant: **FIAR FABBRICA ITALIANA APPARECCHIATURE RADIOELETTRICHE S.p.A.**
**Via G.B. Grassi 93**
**I-20157 Milano (IT)**

(72) Inventor: **Gambarara, Marcello**
**Viale Monza, 325**
**I-20126 Milan (IT)**

(74) Representative: **Modiano, Guido, Dr.-Ing. et al**
**Modiano & Associati S.r.l.**
**Via Meravigli, 16**
**I-20123 Milano (IT)**

(54) **High-efficiency direct-current converter.**

(57) DC-to-DC converter including a voltage generator, a load which is connected in series to the generator, an inductor which is connected in series to the terminal of a first polarity of the generator and to the load, an output capacitor which is connected in parallel to the load; the particularity of the converter resides in that an autotransformer is interposed between the inductor and the load and comprises four windings one of the terminals of which is connected to a single contact point which is connected to the inductor; the first and second windings are connected to switching means which are connected to the terminal of a second polarity of the generator; the third and fourth windings are connected to rectifier elements which are connected to the load; the voltage across the load is a function of the open/closed state of the switches.

Fig. 1

The present invention relates to a high-efficiency direct-current converter, better known as DC-to-DC converter.

The use of DC converters is now well-known in the field of electronics. DC converters are used in devices and circuits whose voltage or current source is unsuitable to supply all the components or elements included in the device or circuit.

For example, in digital circuit systems it is easy to find a supply voltage of +5V which is not suitable to supply an operational amplifier which might require a voltage of +15V.

Known converters are constituted by a constant-voltage generator and by a load. An output capacitor is connected in parallel to the load. An inductor and a diode, arranged in series, are placed between the generator and the load. One terminal of a switch is connected to the contact point of the inductor and of the diode, whereas the other terminal of the inductor is connected to the ground. The switch discharges the inductive energy stored in the inductor to prevent the current applied across the load from reaching excessive values. The desired output voltage is obtained by means of the controlled switching of the switch.

The drawback of these converters is that the electronic components handle the entire power supplied by the converter, i.e.

$$P = V_{OUT} \times I_{OUT}$$

where $V_{OUT}$ is the output voltage and $I_{OUT}$ is the output current. These converters accordingly have high consumption.

Since the power supply sources often have a short life (e.g. batteries) or there is a need for limited consumption, it is desirable to have a DC converter that is highly efficient.

Furthermore, there is always the need to have DC converters that obtain the same output characteristic but subject the components to lower current and voltage values, extending their life or requiring components with lower power ratings.

The aim of the present invention is to provide a DC converter which is more efficient than known converters.

Within the scope of this aim, an object of the present invention is to provide a DC converter which consumes less and requires smaller components with a lower power rating.

Another object of the present invention is to provide a converter which is highly reliable, relatively easy to manufacture and at competitive costs.

This aim, these objects and others which will become apparent hereinafter are achieved by a DC-to-DC converter which comprises a voltage generator, a load which is connected in series to said generator, an inductor which is connected in series to the terminal of a first polarity of said generator and to said load, and an output capacitor which is connected in parallel to said load, characterized in that an autotransformer is interposed between said inductor and said load, said autotransformer comprising a first winding, a second winding, a third winding and a fourth winding, said windings having one of their terminals connected in a single contact point, said single contact point of the windings being connected to said inductor, said first and second windings being connected, at their other terminal, to switching means which are connected to the terminal of a second polarity of said generator, said third winding being connected, at its other terminal, to a first rectifier element which is connected to said load, said fourth winding being connected, at its other terminal, to a second rectifier element which is connected to said load, the voltage across said load being a function of the open/closed state of said switches.

Further characteristics and advantages of the invention will become apparent from the description of a preferred but not exclusive embodiment of a DC converter, illustrated only by way of non-limitative example in the accompanying drawings, wherein:

figure 1 is an electric diagram of the converter according to the present invention;

figure 2 is a plot of the waveforms related to the converter according to the present invention;

figure 3 is a diagram of a second embodiment of the converter according to the present invention;

figure 4 is a plot of the waveforms related to the second embodiment of the converter according to the present invention, shown in figure 3;

figure 5 is a diagram of a third embodiment of the converter according to the present invention;

figure 6 is a plot of the waveforms related to the third embodiment of the converter according to the present invention, shown in figure 5.

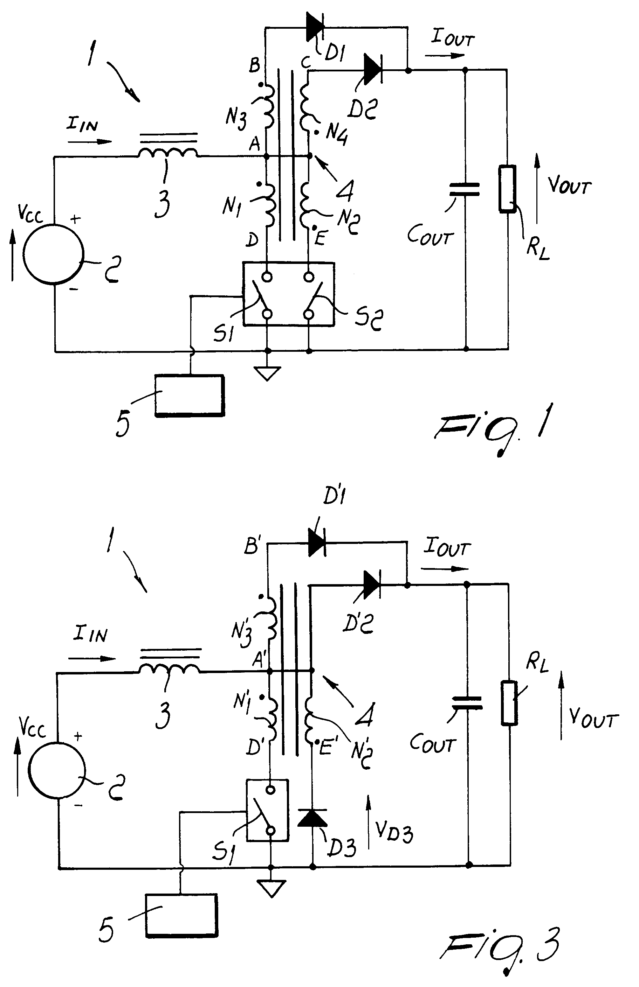

Initially with reference to figure 1, the reference numeral 1 designates the converter according to the present invention. The power source, constituted by a constant-voltage generator, is designated by the reference numeral 2. An inductor 3 is connected in series to the positive terminal of the generator 2. The negative terminal of the generator 2 is connected to the ground. The other terminal of the inductor 3 is connected to an autotransformer 4 with four windings. The autotransformer 4 has four windings, designated by N1, N2, N3 and N4 respectively. The terminals A of the winding N1, B of the winding N3, E of the winding N2, and A of the winding N4 are mutually in phase. The inductor 3 is connected to a single contact point (A) of a terminal of the windings N1-N4. Moreover, the ratio between the windings N3 and N1 is equal to the ratio between the windings N4 and N2.

The winding N1 is connected to the ground by means of a first switch S1. In a similar manner, the winding N2 is connected to the ground by means of a second switch S2.

The switches can be of any kind, advantageously of the semiconductor-based kind, either voltage-controlled or current-controlled.

The switches are driven by driver means 5 which can be constituted by a PWM modulator which generates signals for activating the switches.

The winding N3 is connected to the anode of a first diode D1. In a similar manner, the winding N4 is connected to the anode of a second diode D2. The cathodes of the two diodes D1 and D2 are connected to a load $R_L$ which is connected to the ground.

The diodes D1 and D2 can be replaced with rectifier semiconductors having different characteristics.

The terminals of the windings N3 and N4 which are not connected to the point A are designated by B and C respectively.

The terminals of the windings N1 and N2 which are not connected to the point A are designated by D and E respectively.

An output capacitor $C_{OUT}$ is arranged in parallel to the load $R_L$.

The steady-state operation of the device is as follows. With reference to figures 1 and 2, at a time $T = T_0$ the switch S1 is closed, thus allowing current to circulate in the winding N1. This current increases with a gradient that is limited by the presence of the inductor 3 and starts with a step that depends on the value of the current of the load $I_L$ (see figure 2).

During the interval $T_A = T_1 - T_0$ the following voltage is present across the winding N3:

$$V_{BA} = V_{AD} \times n$$

where $n = N3/N1 = N4/N2$: in other words, the turns ratio of the transformer 4, $V_{BA}$ is the voltage across the winding N3, and $V_{AD}$ is the voltage across the winding N1, which can be defined as:

$$V_{AD} = V_{OUT}/(1 + n)$$

The sum of the voltages $V_{BA}$ across the winding N3 and $V_{AD}$ across the winding N1 is rectified by the first diode D1 and applied to the load, raising said voltage at the load $V_{OUT}$ to a value that is higher than the input voltage $V_{CC}$.

During a second interval $T_B = T_2 - T_1$, both switches S1 and S2 are open. The input current $I_{IN}$ continues to flow in the inductor 3 and then divides between the two branches related to the diodes D1

and D2 and the windings N3 and N4. The energy stored by the inductor 3 during the period $T_A = T_1 - T_0$ is entirely transferred in output, i.e. on the load $R_L$.

During a third interval $T_C = T_3 - T_2$ the switch S2 is closed while the switch S1 is open, thus allowing current to circulate in the winding N2. Said current increases with a gradient that is limited by the presence of the inductor 3 and starts with a step that depends on the load current value. Like the period $T_A = T_1 - T_0$, the voltage present across the winding N4 is

$$V_{CA} = V_{AE} \times n$$

where $n = N3/N4 = N4/N2$, i.e. the turns ratio of the transformer 4, and $V_{CA}$ is the voltage across the winding N4, whereas $V_{AE}$ is the voltage across the winding N2.

Said voltage is rectified by the diode D2 and is applied to the load $R_L$, thus increasing the value of the voltage on the load $V_{OUT}$.

During a fourth interval $T_D = T_4 - T_3$, both switches S1 and S2 are open and what has already been described in the interval $T_B = T_2 - T_1$ reoccurs.

Assuming $T_0 = 0$, and with an appropriate choice of the ratio $D = T_1/T_4$ and of n, the voltage on the load $V_{OUT}$ can reach any value above the input voltage $V_{CC}$ according to the expression

$$V_{OUT} = V_{CC} \times [1 + (n \times D)]$$

Figure 3 illustrates another embodiment of the DC-to-DC converter, according to the same inventive concept as the present invention. Whereas figure 1 shows a push-pull converter, figure 3 shows a forward converter.

The different of this embodiment with respect to the embodiment of figure 1 resides in the fact that the second switch S1 is replaced with a diode D3 and that the winding N4 is not provided. The anode of the diode D3 is connected to the ground (and to the negative terminal of the voltage generator 2), whereas the cathode is connected to the winding N2'.

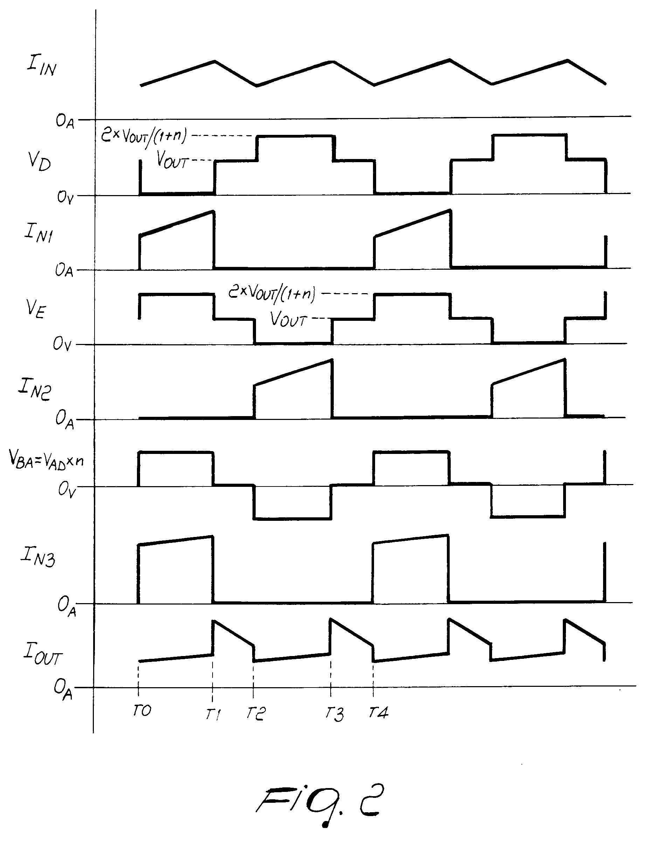

Steady-state operation of this second embodiment is as follows. With reference to the above described figures 3 and 4, like in the push-pull embodiment, at a time $T = T_0$ the switch S1 is closed, thus allowing current to circulate in the winding N1. Said current increases with a gradient that is limited by the presence of the inductor 3 and starts with a step that depends on the value of the current of the load $I_L$ (see figure 4).

During the interval $T_{A'} = T_1 - T_0$ across the winding N3 there is a voltage

$$V_{B'A'} = V_{A'D'} \times n$$

where n = N3'/N1', i.e. the turns ratio $V_{B'A'}$ of the transformer 4 is the voltage across the winding N3', and $V_{A'D'}$ is the voltage across the winding N1', which is defined as

$$V_{A'D'} = V_{OUT}/(1 + n)$$

The sum of the voltages $V_{B'A'}$ across the winding N3' and $V_{A'D'}$ across the winding N1' is rectified by the first diode D1' and applied to the load, raising said voltage at the load $V_{OUT}$ to a value that is higher than the input voltage $V_{CC}$.

During the two subsequent intervals $T_{B'} = T_2-T_1$ and $T_{C'} = T_3-T_2$ (see figure 4) the switch S1 is open and the input current $I_{IN}$ continues to flow in the inductor 3 and is then divided between the two branches related to the diodes D1' and D2', whereas the energy stored by the inductor 3 during the interval $T_{A'} = T_1-T_0$ is fully transferred onto the load $R_L$.

Furthermore, during the interval $T_{B'} = T_2-T_1$, due to the opening of the switch S1 and to the consequent reversal of the voltage $V_{A'D'}$, across the winding N1' the energy of the transformer 4 is discharged across the diode D3.

Assuming $T_0 = 0$, and with an appropriate choice of the ratio $D = T_1/T_3$ and of n, the voltage across the load $V_{OUT}$ can reach any value above the input voltage $V_{CC}$, as for the push-pull converter, according to the expression

$$V_{OUT} = V_{CC} \times [1 + (n \times D)]$$

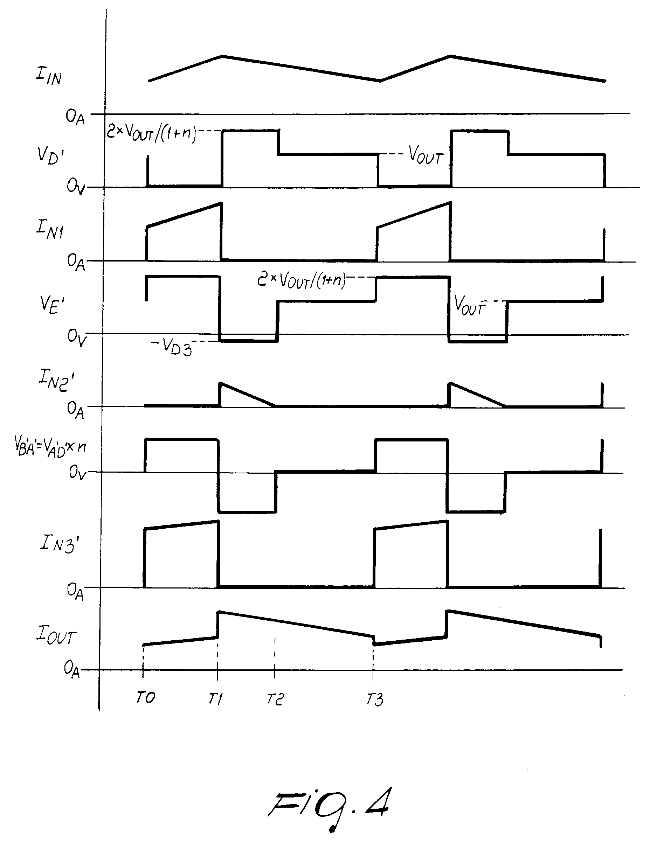

Figure 5 illustrates a third embodiment of the DC-to-DC converter according to the same inventive concept of the present invention.

The difference of this embodiment with respect to the one shown in figure 1 consists in not providing the windings N3 and N4 and in connecting the terminals of the windings N1" and N2" that are not connected to the single contact point (A") of the windings to the load $R_L$ by means of the diodes D1" and D2" respectively. The anode of the diode D1" is connected to the terminal D" of the winding N1", whereas the cathode of D1" is connected to the load $R_L$. In a similar manner, the anode of the diode D2" is connected to the terminal E" of the winding N2", whereas the cathode of D2" is connected to the load $R_L$. The turns ratio of the transformer 4 is equal to 1, i.e. N1" = N2". The terminal of the winding N1" which is connected to the point A" and the terminal E" of the winding N2" are mutually in phase.

The operation of this third embodiment is as follows.

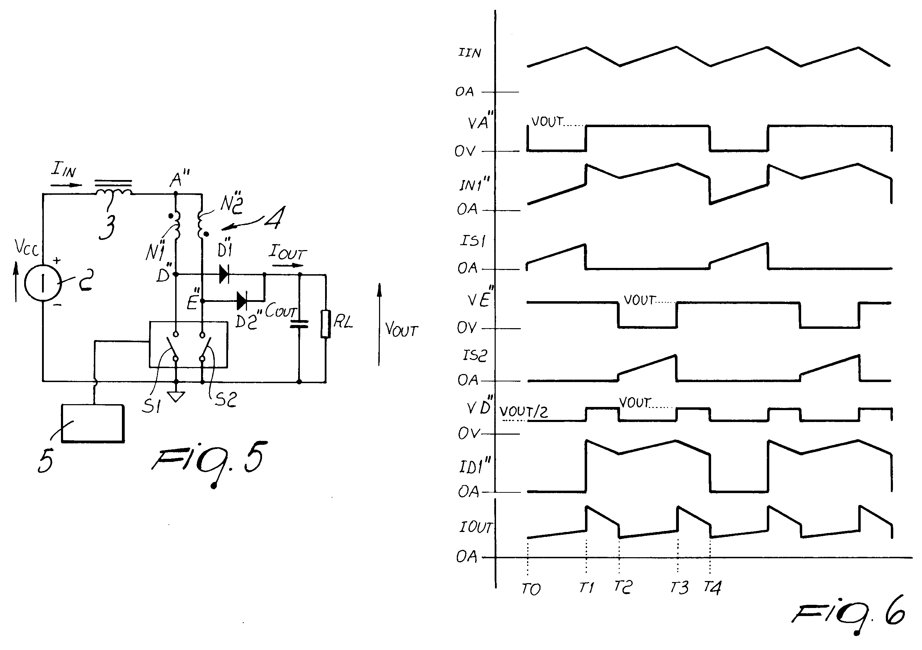

With reference to the above figures 5 and 6, like the embodiment of figure 1, at a time $T = T_0$

the switch S1 is closed, thus allowing current to circulate in the winding N1". Said current rises with a gradient that is limited by the presence of the inductor 3 and starts with a step that depends on the value of the power controlled by the circuit involved.

During the interval $T_{A''} = T_1-T_0$ the following voltage is present across the winding N2":

$$V_{E''A''} = V_{A''D''} \times n$$

where $V_{E''A''}$ is the voltage across the winding N2", $V_{A''D''}$ is the voltage across the winding N1", and n is equal to N2"/N1", i.e. the turns ratio of the transformer 4, which in this case is equal to 1. Accordingly, the voltage at the point A" defined as

$$V_{A''} = V_{OUT}/(1 + n)$$

becomes

$$V_{A''} = V_{OUT}/2$$

The sum of the voltages $V_{E''A''}$ across the winding N2" and $V_{A''D''}$ across the winding N1" is rectified by the second diode D2" and applied to the load, raising said voltage at the load $V_{OUT}$ to a value that is higher than the input voltage $V_{CC}$.

During a second interval $T_{B''} = T_2-T_1$ both switches S1 and S2 are open. The input current $I_{IN}$ continues to flow in the inductor 3 and is then divided between the two branches related to the diodes D1" and D2" and the windings N3" and N4". The energy stored by the inductor 3 during the period $T_A = T_1-T_0$ is entirely transferred to the output, i.e. to the load $R_L$.

During a third interval $T_{C''} = T_3-T_2$ the switch S2 is closed, whereas the switch S1 is open, thus allowing current to circulate in the winding N2". Said current rises with a gradient that is limited by the presence of the inductor 3 and starts with a step that depends on the value of the load current. As in the interval $T_{A''} = T_1-T_0$, the following voltage is present across the winding N4":

$$V_{D''A''} = V_{A''E''} \times n$$

where $V_{D''A''}$ is the voltage across the winding N1", $V_{A''E''}$ is the voltage across the winding N2", and n is the turns ratio of the transformer 4, i.e. N2"/N1" = 1. Accordingly, the voltage at the point A is defined, as in the interval $T_{A''} = T_1-T_0$, as:

$$V_A = V_{OUT}/(1 + n) = V_{OUT}/2$$

The voltage $V_{D''A''}$ across the winding N1" is rectified by the first diode D1" and, as in the case of $T_{A''} = T_1-T_0$, applied to the load, raising said voltage at the load $V_{OUT}$ to a value that is higher than the input voltage $V_{CC}$.

During a fourth interval $T_{D''} = T_4 - T_3$, both switches S1 and S2 are open and the conditions already described in the period $T_{B''} = T_2 - T_1$ reoccur.

Assuming $T_0 = 0$, and with an appropriate choice of the ratio $D = T_1 / T_4$ and of n, the voltage across the load $V_{OUT}$ can reach any value between the input voltage $V_{CC}$ and a voltage $V = 2 \times V_{CC}$, according to the expression

$$V_{OUT} = V_{CC} \times (1 + D)$$

With respect to known DC-to-DC converters, the converters according to the present invention offer the advantage that they produce an output voltage $V_{OUT}$ that is always higher than the input voltage $V_{CC}$, making the adjustment switch control only the power difference defined as

$$P = (V_{OUT} - V_{CC}) \times I_{OUT}$$

where $I_{OUT}$ is the output current applied to the load, whereas known converters make the adjustment switch control the entire power applied to the load, which is

$$P = V_{OUT} \times I_{OUT}$$

pointing out the higher efficiency of the converters according to the present invention. The converters thus conceived allow to use components having a lower power rating and smaller dimensions and at the same time the consumption of the converters is reduced.

Furthermore, as shown in figures 2, 4 and 6, with respect to the known topology of DC-to-DC converters the output current ripple $I_{OUT}$ is much smaller, with a lower electrical stress in the output capacitor $C_{OUT}$ and a lower voltage ripple in equal conditions.

The invention thus conceived is susceptible to numerous modifications and variations, all of which are within the scope of the inventive concept.

Finally, all the details may be replaced with other technically equivalent ones.

In practice, the materials employed, as well as the shapes and dimensions, may be any according to the requirements without thereby abandoning the protective scope of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. DC-to-DC converter which comprises:
   -- a voltage generator,
   -- a load which is connected in series to said generator,
   -- an inductor which is connected in series to the terminal of a first polarity of said generator and to said load,
   -- an output capacitor which is connected in parallel to said load,
   characterized in that an autotransformer is interposed between said inductor and said load, said autotransformer comprising a first winding, a second winding, a third winding and a fourth winding, said windings having one of their terminals connected in a single contact point,
   -- said single contact point of the windings being connected to said inductor,
   -- said first and second windings being connected, at their other terminal, to switching means which are connected to the terminal of a second polarity of said generator,
   -- said third winding being connected, at its other terminal, to a first rectifier element which is connected to said load,
   -- said fourth winding being connected, at its other terminal, to a second rectifier element which is connected to said load,
   the voltage across said load being a function of the open/closed state of said switches.

2. DC-to-DC converter which comprises:
   -- a voltage generator,
   -- a load which is connected in series to said generator,
   -- an inductor which is connected in series to the terminal of a first polarity of said generator and to said load,
   -- an output capacitor which is connected in parallel to said load,
   characterized in that an autotransformer is interposed between said inductor and said load, said autotransformer comprising a first and a second windings having one of their terminals connected in a single contact point,
   -- said single contact point of the windings being connected to said inductor,
   -- said first and second windings being connected, at their other terminal, to switching means which are connected to the terminal of a second polarity of said generator,
   -- said first and second windings being connected, at said other terminal, to a first and a second rectifier elements which are connected to said load,

the voltage across said load being a function of the open/closed state of said switches.

3. Converter according to claim 2, characterized in that said switching means comprise a first switch which is interposed between said first winding and said terminal of a first polarity of said generator and a second switch which is interposed between said second winding and said terminal of a first polarity of said generator.

4. Converter according to one or more of the preceding claims, characterized in that it comprises means for controlling said switching means that provide four switching states which occur in four successive intervals, wherein:
-- during the first time interval said first switch is closed and said second switch is open;
-- during the second time interval said switches are open;
-- during the third time interval said first switch is open and said second switch is closed;
-- during the fourth time interval said two switches are open;
the voltage across said load being a function of the duration of said intervals.

5. Converter according to one or more of the preceding claims, characterized in that said first and third windings belong to a first phase and said second and fourth windings belong to a second phase which is opposite to said first phase.

6. Converter according to one or more of the preceding claims, characterized in that said first winding belongs to a first phase and said second winding belongs to a second phase which is opposite to said first phase.

7. Converter according to one or more of the preceding claims, characterized in that the anode of said first and second rectifier elements is connected to said third and fourth windings, the cathodes of said rectifier elements being connected to said load.

8. Converter according to one or more of the preceding claims, characterized in that the anode of said first and second rectifier elements is connected to said first and second windings, the cathodes of said rectifier elements being connected to said load.

9. DC-to-DC converter which comprises:
-- a voltage generator,
-- a load which is connected in series to said generator,
-- an inductor which is connected in series to the terminal of a first polarity of said generator and to said load,
-- an output capacitor which is connected in parallel to said load,
characterized in that an autotransformer is interposed between said inductor and said load, said autotransformer comprising a first winding, a second winding and a third winding, said windings having one of their terminals connected in a single contact point,
-- said single contact point of the windings being connected to said inductor,
-- said first winding being connected, at its other terminal, to switching means which are connected to the terminal of a second polarity of said generator,
-- said second winding being connected, at its other terminal, to a third rectifier element which is connected to the terminal of said second polarity of said generator,
-- said third winding being connected, at its other terminal, to a first rectifier element which is connected to said load,
-- said single contact point being connected to a second rectifier element which is connected to said load,
the voltage across said load being a function of the open/closed state of said switches.

10. Converter according to claim 9, characterized in that said switching means comprise a switch which is interposed between said first winding and said terminal of a first polarity of said generator.

11. Converter according to one or more of the preceding claims, characterized in that it comprises means for controlling said switching means which provide four switching states which occur in four successive intervals, wherein:
-- during the first time interval said switch is closed;
-- during the second time interval said switch is open, allowing to discharge the energy of said autotransformer across said third diode;
the voltage across said load being a function of the duration of said intervals.

12. Converter according to one or more of the preceding claims, characterized in that said first and third windings belong to a first phase and said second winding belongs to a second phase which is opposite to said first phase.

13. Converter according to one or more of the preceding claims, characterized in that said first polarity of said generator is positive and said second polarity is negative.

14. Converter according to one or more of the preceding claims, characterized in that said terminal of a second polarity of said generator is connected to the ground.

15. Converter according to one or more of the preceding claims, characterized in that said rectifier elements are semiconductor-based rectifiers.

16. Converter according to one or more of the preceding claims, characterized in that said rectifier elements are diodes.

17. Converter according to one or more of the preceding claims, characterized in that the anode of said first and second rectifier elements is connected to said third and fourth windings, the cathodes of said rectifier elements being connected to said load, the anode of said third diode being connected to said terminal of a second polarity of said generator and the cathode of said third diode being connected to said second winding.

Fig. 1

Fig. 3

Fig. 2

Fig. 4

Fig.5

Fig.6

EP 0 632 571 A2